# EUROPEAN PATENT SPECIFICATION

(11) **EP 0 999 977 B1**
(45) Date of publication and mention of the grant of the patent: **07.01.2004**
(21) Application number: 98920407.8
(22) Date of filing: 16.04.1998
(51) Int. Cl.: B64C 39/00, B64C 11/00

(54) **FLYING VEHICLE WITH LIFT GENERATORS**
FLUGGERÄT MIT AUFTRIEBERZEUGERN
VEHICULE VOLANT DOTE DE GENERATRICES ASCENSIONNELLES

(30) Priority: 08.08.1997 BA 970244
(43) Date of publication of application: 17.05.2000
(73) Proprietor: Zelic, Safedin, 71000 Sarajevo (BA)
(72) Inventor: Zelic, Safedin, 71000 Sarajevo (BA)
(74) Representative: Hano, Christian, Dipl.-Ing.
(86) International application number: PCT/BA1998/000001
(87) International publication number: WO 1999/007601

(56) References cited:
- DE-A- 4 320 625
- DE-C- 623 356
- DE-C- 633 496
- FR-A- 2 008 452
- GB-A- 747 172
- US-A- 2 966 317
- US-A- 2 990 139
- US-A- 4 957 413

## Description

This invention is related to the field of aerotechnique, aeromechanics and aerodynamics in general.

Several kinds of aircrafts that are heavier than air have been invented so far, such as glider, hang glider, gyro din, convertoplan, colopter, airplane, and helicopter. However, among all these flying bodies only airplanes and helicopters found use. But even these two aircrafts have some major defects which make their mass use as individual, family, private and cargo air means of transportation impossible. An airplane's basic disadvantage is the dependence on its takeoff power upon translational speed of its motion. It is impossible for airplane to go upwards and downwards vertically or to soar.

For take off and landing airplane special infrastructural installations on land are required which are very expensive and need large area which can be found only in the outskirts of cities; so individual and family use of this aircraft, as mass means of transportation is out of question.

Great minimum speed of the airplane while flying requires large wing surfaces during takeoff and landing; which, during greater speeds, become an extra weight and extra unnecessary aerodynamic resistance. These large wing surfaces require an extra strong point of attachment on the fuselage of the plane which therefore becomes more massive and heavier. All that additional weight and increased resistance require big thrust, which in turn requires large quantity and consumption of fuel. In this case thrust intensity does not depend directly on translational motion of the aircraft like airplane but the way that helicopter produces aerodynamic force is much more ineffective than the way how wing of the airplane does it. Therefore, surface and angle of attack of a rotor blade of a helicopter must be increased which involves an increasing of the aerodynamic resistance which requires an increase of engine power and an increase of fuel consumption. This causes increase of weight which can be neutralized only by increasing of rotor blades' surface. However, this increase on one hand is limited by blade mass and it causes strong centrifugal load and bigger aerodynamic resistance; and on the other band, it is limited by peak of rim speed which should not be faster than speed of sound. If thrust coefficient of three blades is also added to this, it comes to peak point of possible blade surface increase on rotor of helicopter and to a total thrust power. This all reflects negatively on possible peak gravitational load and maximum translational speed which is much lesser than translational speed of the airplane.

The design of a helicopter is very complex beginning with necessity for powerful engines which are mainly gas turbines which take very complex power transfer and low-range geared system. The very complex head of the rotor undergoes great centrifugal aerodynamic. For all this a helicopter is expensive, uneconomical, and complicated aircraft so it could not become mass means of transportation.

US 2 966 317 discloses an aircraft comprising two front and two rear propellers which are mounted on opposite sides of the fuselage. The blades of the propellers can be axially rotated to rise the aircraft.. Further, the blades can be tilted with regard to the horizontal plane or the longitudinal axis of the fuselage to propel the aircraft forwardly or rearwardly. For controlling the lateral direction a steering rudder is provided.

US 2 990 239 also discloses an aircraft comprising two front and two rear propellers which are mounted on opposite sides of the fuselage. The blades of the propellers can be axially rotated to rise the aircraft. and to propel the aircraft forwardly or rearwardly. For controlling the lateral direction a steering rudder is provided.

The problem underlying the invention is to design a dynamic aircraft which is able to take off and land vertically and to soar in a big span of altitudes. The intensity of the aerodynamic force should be changeable independently on the work of engine. The direction of the aerodynamic force should be changeable together with fuselage of the aircraft or set free from fuselage position.

This problem is solved by an aircraft comprising the features of claim 1. Preferred embodiments are subject matter of claims 2 to 6.

The aircraft of the present invention (Aeromobil) unites all positive characteristics of an airplane and a helicopter along with some genuine characteristics which neither has an airplane nor a helicopter nor any other known aircraft. The Aeromobil generates necessary thrust power independently from its translational speed, so that the blade-surface of its rotor is used totally in each phase while flying without any extra unneeded aerodynamic, centrifugal and gravitational loads. The thrust coefficient of its rotor blades is five times bigger than the thrust coefficient of airplane wings, and even many times bigger than the thrust coefficient of rotor blades of a helicopter. This makes it possible to reduce the blade surfaces of Aeromobil's rotors which results also in reducing of the total weight of the aircraft, which also has positive effects on necessary thrust power and fuel consumption.

The rotor blades in the aerodynamic generators do not only have big thrust coefficient but also a low aerodynamic resistance coefficient during work. The blades do not produce inductive aerodynamic resistance and practically they always act as a wing of an endless wave that results in very useful consequences. The required engine power and the fuel consumption is reduced. The Aeromobil can develop translational speeds like a plane and this translational speed does not have a negative effect negatively on the aerodynamic' generators. Moreover, the speed is used as extra airstream in the aerodynamic generators for producing aerodynamic force. The streamlined shape of the fuselage provides a lift force during high translational speeds and so all the aerodynamic power of generator is directed towards the vector of lift force.

The aircraft of the present invention has a high translational speed. Its vertical axis can take up any direction in the space while the aircraft soars. It is able to start translational motion from every soaring position in any direction. The translational speed of the aircraft does have a negative influence on the performance of its active aerodynamic surfaces. It has a favorable ratio of the total weight of the aircraft and the load which it is able to carry. A control system makes it possible to use all aerodynamic, maneuvering and flying possibilities of the aircraft. The control efficiency does not depend on translational speed of the aircraft. The design of the aircraft is simple and compact. The production does not require complex and costly technologies. The aircraft is economical and generating the aerodynamic force does not require high fuel consumption.

All control moments of aircraft of the invention are completely independent from the translational speed of the aircraft. Hence control efficiency is constant independent from the translational speed or the direction.

The Aeromobil is a simple, dependable, effective and economical aircraft. Its production does not require any special or expensive technologies.

### Brief description of the Several Views of the Drawings

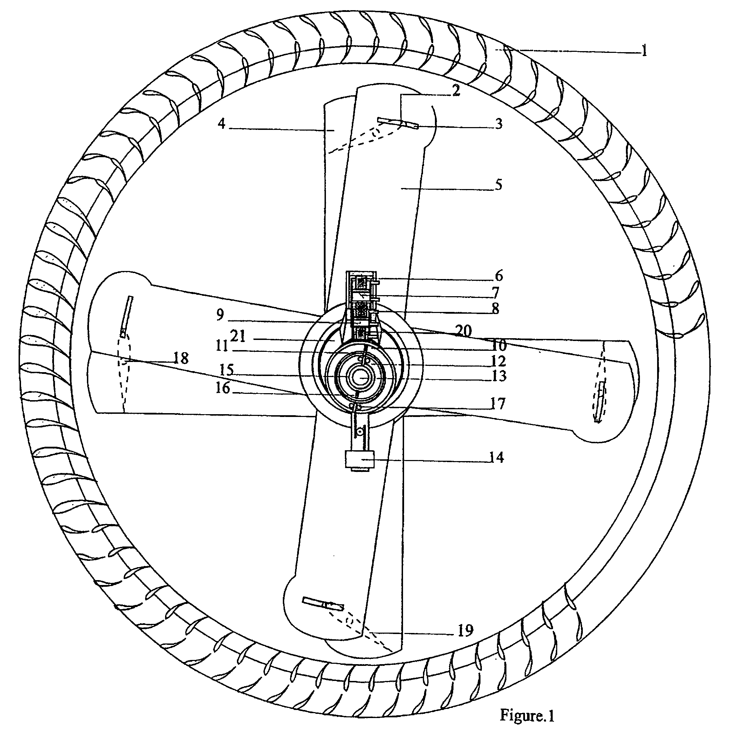

- Fig. 1: is a lateral view of a section of an aerodynamic generator with a section of hydraulic cylinders for control of the work of generator
- Fig. 2: shows an aerodynamic generator with a control head and a drive shaft.

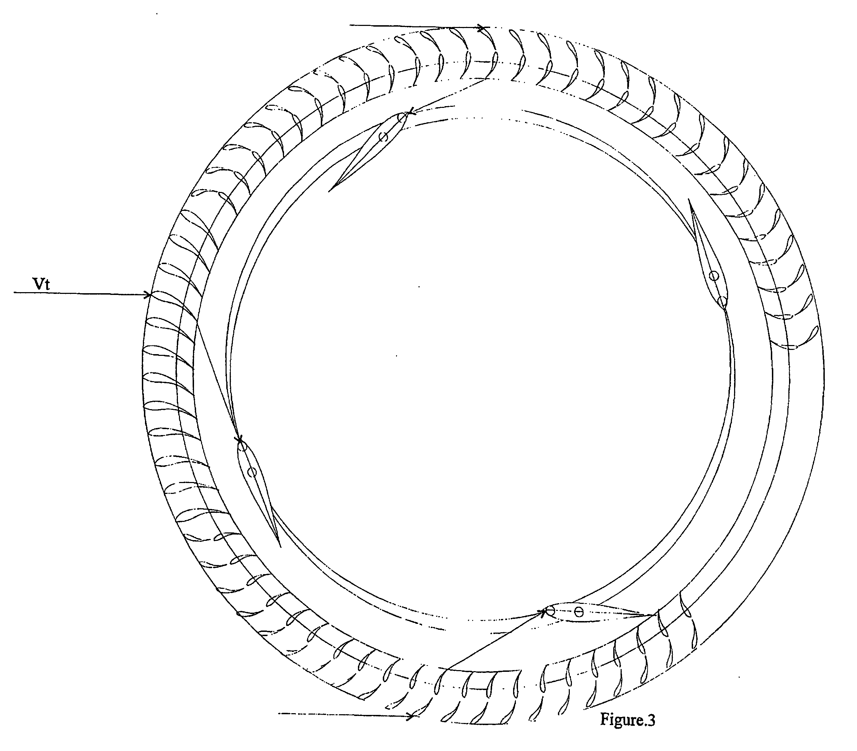

- Fig. 3: illustrates the transformation of the translational speed at the entrance of stator into a tangential speed at the exit from stator by means of a rotor blade.
- Fig. 4: shows a rotor of the aerodynamic generator together with a hydraulic control head and a drive shaft.
- Fig. 5: shows a blade of the rotor.
- Fig. 6: shows a cross-section of the rotor blade.
- Fig. 7: illustrates the periodic change of the angle of attack of the rotor blades in the period of one rotation.
- Fig. 8: illustrates the periodic change of the angle of attack of the rotor blades in the state of producing a lift and propulsion vector (P).
- Fig. 9: illustrates constant values of horizontal components of the lift vectors.
- Fig. 10: shows a control head of a lift vector.
- Fig 11: shows a lateral section of hydraulic cylinders on the control head of the aerodynamic generator.
- Fig. 12: shows a family version of an Aeromobil

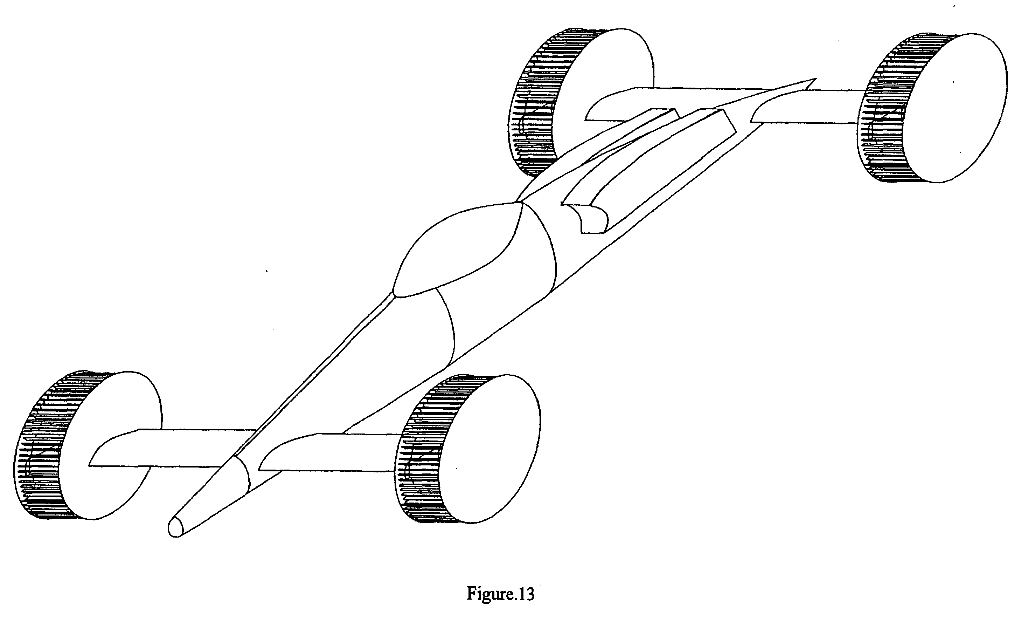

- Fig. 13: shows sports version, of the Aeromobil
- Fig. 14: shows the basic parts of the Aeromobil of Fig. 12.
- Fig. 15: shows the disposition of the lift vector for soaring or vertical translational motion.
- Fig. 16: shows the disposition of the lift vector and the thrust vector during horizontal translational motion.
- Fig. 17: shows the disposition of the thrust vector and the lift vector during generating a turning moment around axis z.
- Fig. 18: shows the disposition of the lift vector during generating a turning moment around axis y.
- Fig. 19: shows the disposition of the lift vector during generating a turning moment around axis x.
- Fig. 20.: Fig. 20.shows steering controls of the Aeromobil.
- Fig. 21: shows the lateral section of the thrust vector control.
- Fig. 22: shows a section of a distributor for the control of direction, altitude and latera I movemet.

The Aeromobil is a dynamic flying machine. It produces necessary force for lift, thrust and control moments, in aerodynamic generators. Aerodynamic generator is composed of two main parts, an aerodynamic stator and an aerodynamic rotor.

The stator has the function to transform translational air speed (which occurs during translational motion of the aircraft) into secondary rotating air speed, which has the same direction as the primary rotating air speed of the rotor. In that way, the total rotating air speed in the generator during translational motion is increased to the value of the secondary rotating speed which is proportional to the translational motion of the aircraft.

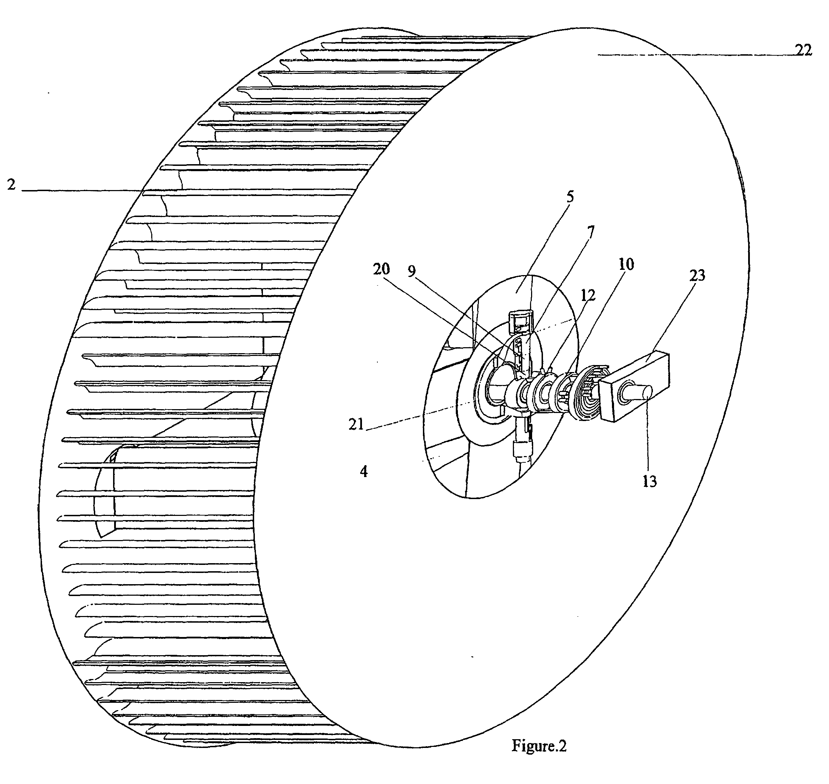

The stator is a round aerodynamic grid consisting of aeroprofiles disposed parallel to a drive shaft 13 of a rotor (Figure 2). The aeroprofiles of the stator are placed so that translational and a parallel air stream (which occurs at entrance in stator's aeroprofiles ) is transformed into a rotating air stream at the exit of stator's aeroprofiles. The output air speed has the direction of a tangent line on a circle orbit of the blades 19 of the rotor. The front resistance is lower and the total aerodynamic force is positive or zero by disposing the blades of the stator in this way. To achieve this, it is necessary to put two lines of the stator blades 1 in the position of the stator where the lift is negative. It means upper-blades and down-blades of stator are reciprocally opposite. Only the part of stator which produces lift force has a line of blades which are proportionally twice as big as the blades from double line.

Besides, it is necessary that rotor rotates in clockwise direction. The stator is immobile and attached to fuselage of the aircraft.

It is closed from lateral sides so that air can get inside stator only through fissure among stator blades.

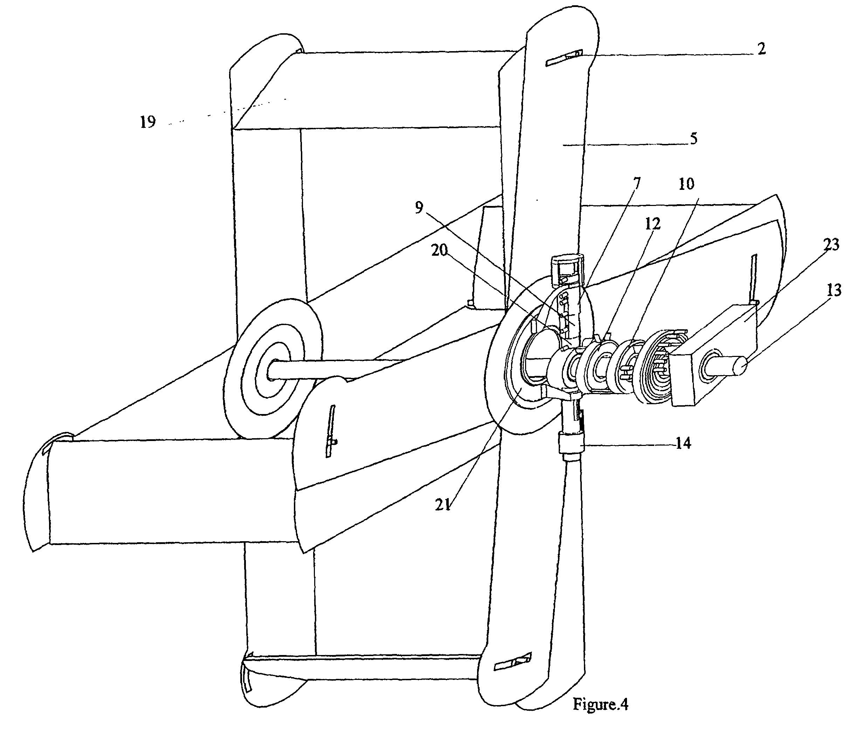

The rotor of the aerodynamic generator is the most important part of the aeromobil (Figure 4). The rotor generates the necessary aerodynamic force for the lift thrust and the control moments. It consists of the drive shaft 13, the blade carriers 4, the blade guide 5, and the control head.

The drive shaft 13 is placed horizontally and goes through the center of the rotor. The drive shaft 13 has the function of moving the rotor and in the same time receives all aerodynamic and gravitational force of the aircraft.

The blade carriers 4 have the function of holding the rotor blades 19 and they are firmly attached to drive shaft 13 and they rotate together with it. The guide 5 has the function of guiding the guiding shaft 2 of rotor blades 19 and to give them the necessary eccentricity. It is not fixed to the drive shaft 13. It is connected between the control head and the blades 19 of the rotor.

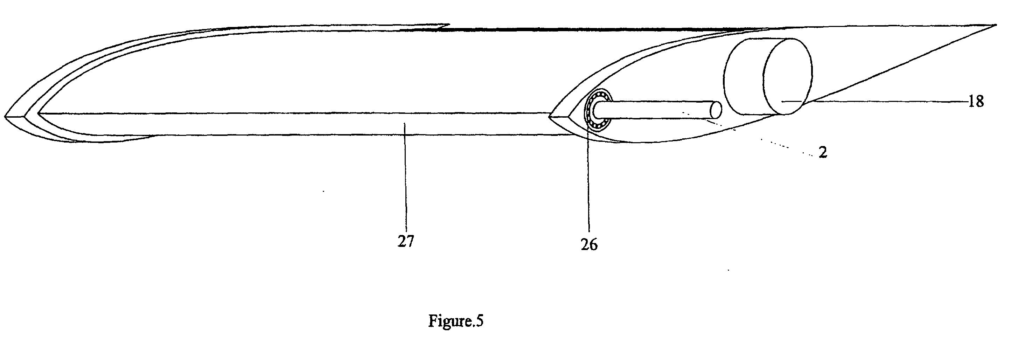

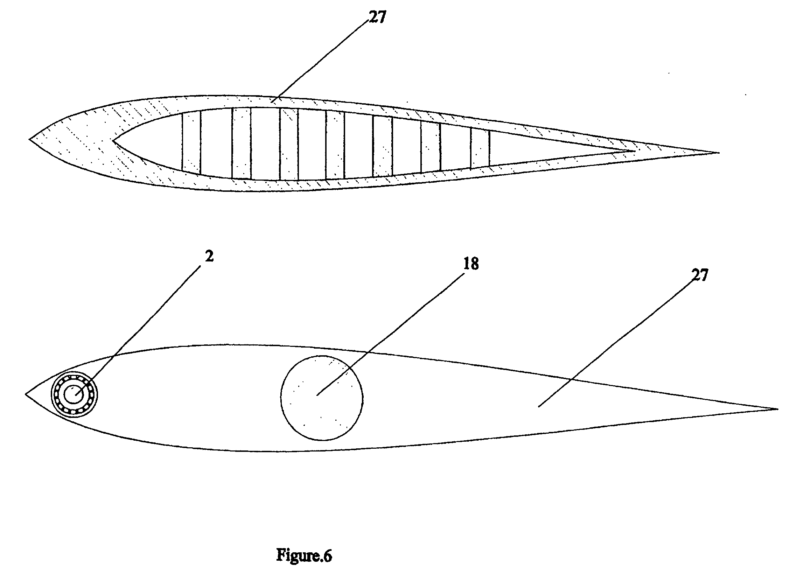

The rotor blades (Figure 5-6) are streamlined bodies of symmetrical aeroprofiles with a constant vertical section. They have the function to generate aerodynamic force necessary for the lift, thrust and control.

Two shafts are situated on the rotor blades 19 in parallel to the front and back edge thereof. These are the main shaft 18 and the guiding shaft 2. The main shaft 8 goes through rotor blade center of gravity and through the center of aerodynamic lift which should go along with blade center of gravity. The shaft 8 receives all centrifugal and aerodynamic force from blade 19 and transmits them to the carriers 4 of the blade.

The blades generate an aerodynamic force in the way that the main shaft 18 of the rotor blade 19 rotates around the drive shaft 13 and the guided shaft 2 of the blade 19 rotates around the shaft of an eccentric bearing 21.

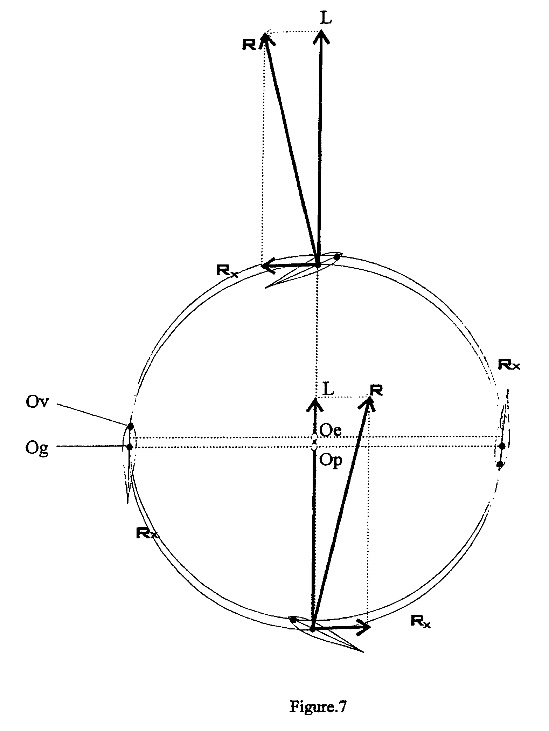

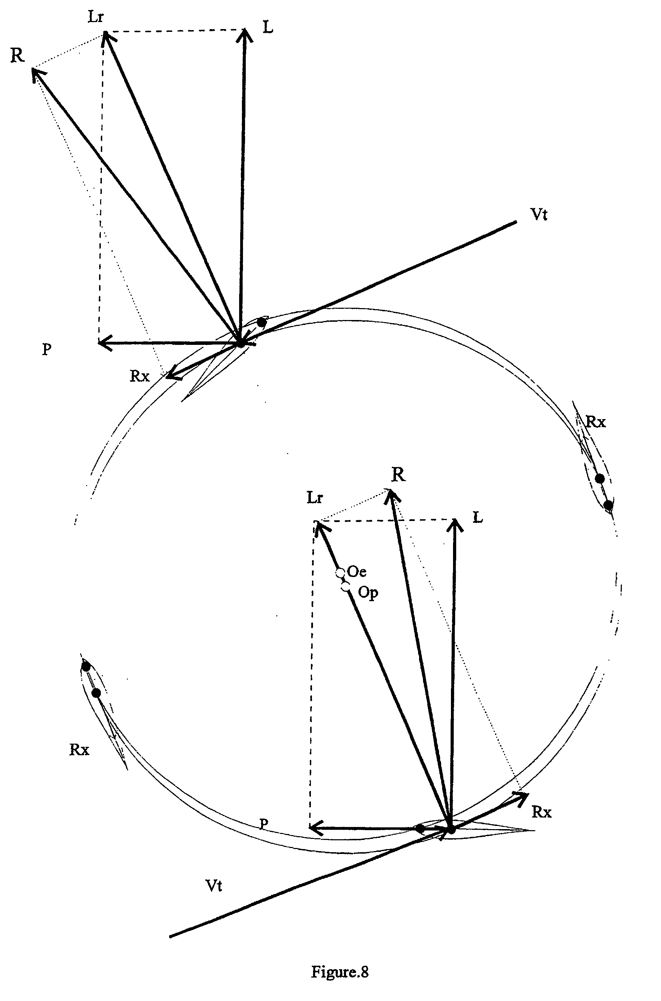

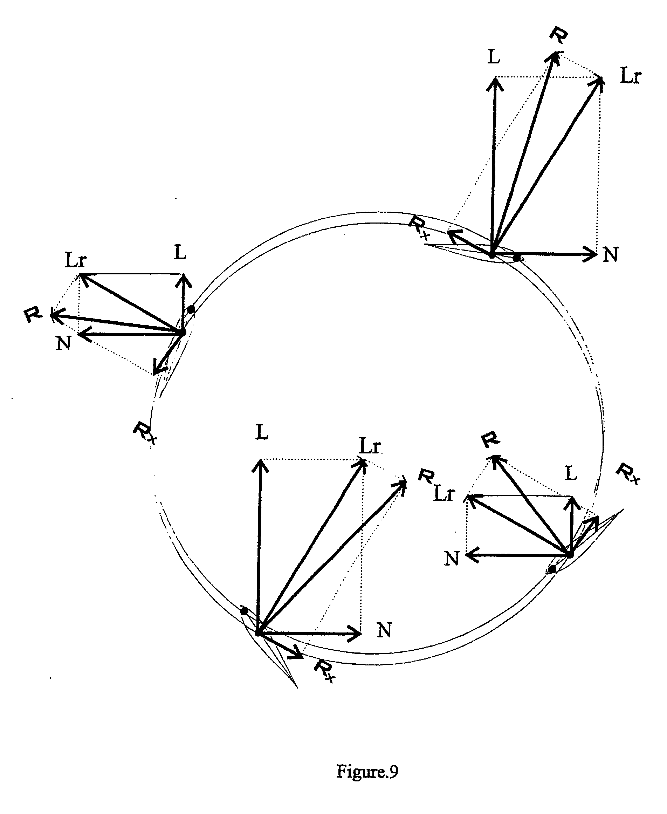

In that way, the blades 19 are placed in a necessary angle of attack which is the highest on that part of the orbit where eccentricity of the guided shaft 2 is the highest (Fig. 7). Just on the same place the intensity of the aerodynamic force is the highest as well. (This is the intensity of its vertical component which represents the lift vector.) The direction of this vector coincides with the direction of the vector of eccentricity of the eccentric bearing 21 with the initial point in the center of the drive shaft 13. During turning of this eccentricity or its increase, lift direction and its turning are also increased (Figure 8). All horizontal components are cancelled mutually in the way that horizontal component of aerodynamic force of blade (which is located in the first quadrant of circle orbit) is cancelled by horizontal component of neighbouring blade in second quadrant (Figure 9). In any point of blade's orbit these components have same intensity and opposite direction. In the same way horizontal component of aerodynamic force (which is located in third and fourth quadrant of circle of orbit of rotor blade) are cancelled.

Every rotor has four blades 19 disposed symmetrically with regard to drive shaft (13), so that only one blade 19 of the rotor can be found in every quadrant at one moment. Forming of the angle of attack is done according to sinus law which provides constant value of total sum of the lift vector of all four blades 19, no matter in which point of circle the orbit blades 19 are found. The guided shaft 2 has the function of disposing the blades 19 in a necessary angle of attack. Also, this shaft 2 transmits one lesser part of aerodynamic force to drive shaft 13 across. The guide 5 and the eccentric bearing 21 are necessary for maintaining the lift direction independent from the position of the aircraft body which happens in extreme order of control.

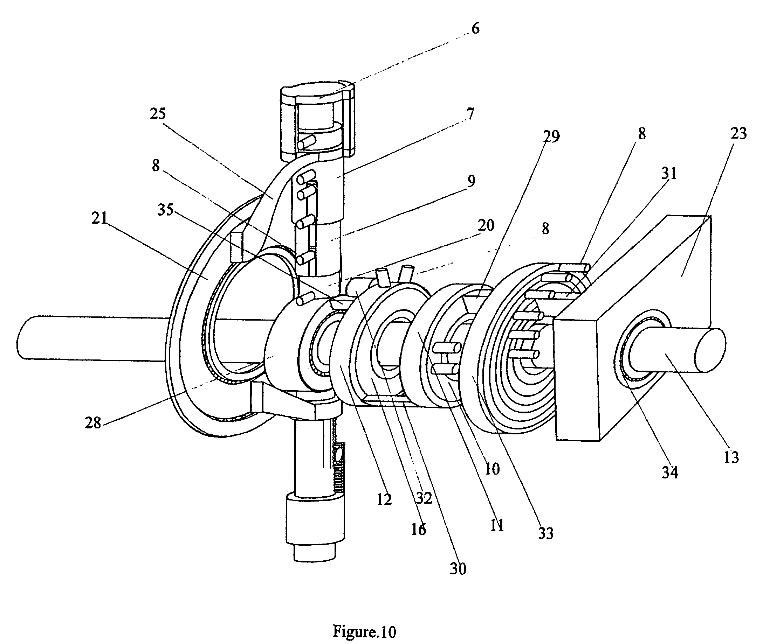

The control head of rotor (Figure 10) consists of one eccentric bearing 21, two carriers 25 of the eccentric bearing 21, three hydraulic cylinders for the change of the angle of attack (CCAA) of rotor blades 19, two hydraulic cylinders for the change of the lift direction (CCLD), an electromagnetic connection 32, a rotating hydraulic connection 33 and a rotor carrier 23.

The eccentric-bearing 21 has the function to carry the guide 5 and gives it necessary eccentricity in relation to the drive shaft 13 of the rotor. It is connected with hydraulic pistons CCAA which can move up and down if necessary. During this, it increases and reduces the eccentricity of the eccentric bearing 21, that is, increases and reduces of the angle of attack of the rotor blades 19, which, in the end, causes increasing or reducing of the total aerodynamic force. This eccentricity can be positive as well as negative.

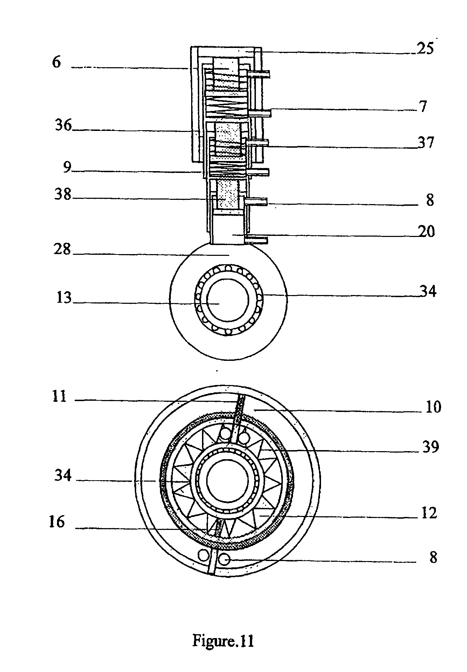

The Hydraulic CCAA (Figure 11) are: The cylinder of group change of the angle of attack (CGCAA) 20, the cylinder CMx 7 and the cylinder CMy 9. The mutual position of these cylinders is conditioned by function they do. Because of this, CGCAA is put as a base for two other cylinders. The piston of cylinder 6 is connected to the body of cylinder CMy 9. The piston of cylinder 36 is connected with eccentric bearing 21 that is, with guide 5.

During the work of the piston in CGCAA 38, the other two cylinders are moved together with their pistons. It is further transmitted to eccentric bearing (21) i.e. to change the angel of attack of rotor blades 19 during the work of the piston in cylinder CMx 7, translational motion of piston and cylinders CMy 9 happens, and all this moves the eccentric bearing (21) in the direction of cylinders piston CMx's motion. In this case, the cylinder as well as the piston CGCAA (20) are not moving. During activation of cylinder,CMy 9 only its piston moves tighter with eccentric bearing. During that time, piston CGCAA and CMx (97) are still.

The function of hydraulic CGCAA 20 is to bring about equal and simultaneous change of the angle of attack of the rotor blades 19 on all four (or even more) aerodynamic generators (40). The cylinder CMx 7 has the function to produce equal but with regard to the direction, opposite change of the angle of attack of the lateral generators.

The cylinders CMy (9) have the same function, only their effect is related to two front and two back generators.

The hydraulic cylinders for changing the lift direction (CCLD) are: The cylinder for group change of the direction of lift (CGCDL) 10 and cylinder CMz 12. These cylinders differ from CCAA in that their pistons circle during work i.e. bring about rotation of the object to which they are tied. These cylinders are mutually placed in the way that the activation of piston in CGCDL brings about moving of cylinder and piston CMz 12. During activation of the piston CMz 16, motion of CGCDL does not happen because these two are not connected physically. CGCDL 10 has the function to turn the eccentric bearing 21 around drive shaft 13 and in this way to change direction of eccentricity, which means that the lift direction has changed for the same angle value. These cylinders move the direction of lift simultaneously and in the same direction on all four generators. The cylinders CMz 12 do the same only their effect is pointed to lateral generators so that angle of thrust vector is equal on both sides of the aircraft but has opposite direction.

The electromagnetic connection 32 is located between the piston 12 of CMz and the carrier of CGCDL. This connection has the function to separate these two bodies in order to stop physical contact between the control head of the rotor and the aircraft fuselage. This is necessary when the aircraft should be in order of work and when the lift direction of all generators becomes independent from the position of the aircraft.

The rotating hydraulic connection 33 consists of a mobile disk on which are located receptacles for hydraulic cylinders and a connection body which is tightly tied to the carrier 31 of the generator and from which extend receptacles to the main hydraulic distributors. This connection provides charge to cylinder with oil under pressure in those conditions when aircraft flies and it is necessary that lift direction is independent from position of aircraft.

The carrier 23 of the aerodynamic generator has the function to transmit all gravitational and aerodynamic loads from the generator to the fuselage of the aircraft. A Bearing 13 is provided thereon through which the drive shaft 13 of the rotor extends.

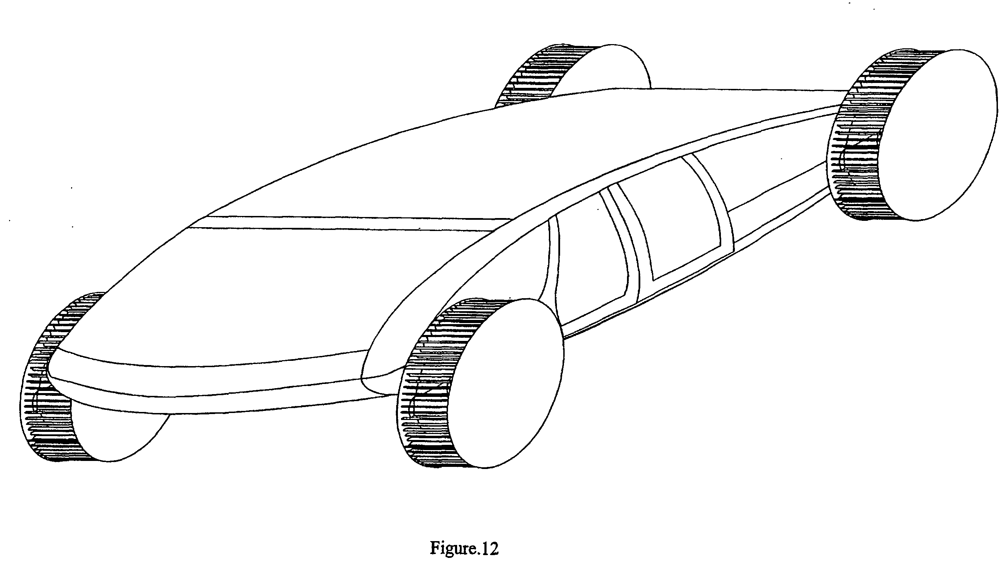

The basic concept of the Aeromobil has four aerodynamic generators placed on angles of imagined rectangular base of the aircraft (Figure 12). Depending on that whether this imagined base goes through gravitational center, above, or below it, the aircraft takes position of indifferent, labile and stable balance, respectively. In Figure 10., this base goes through gravitational center and it is in position of indifferent balance.

The Aeromobil's fuselage has two basic shapes. One is for family or cargo, (Figure 12.), and the other is a sports version. Both fuselages are designed such that their resistance force is as less as possible. This fuselage should produce aerodynamic lift which provides increase of the thrust vector on aerodynamic generators during certain translational speed.

That phenomenon is particularly expressed in the family model of the Aeromobil which is in fact an aerodynamic profile similar to a wing of airplane. Controls and flying instruments, motor group, fuel tanks and transmission are situated in it. This fuselage (aerodynamic profile) could be brought under a favorable angle of attack during translational speed of the aircraft with the help of activation of the hydraulic cylinders CMy 9 i.e. bringing about a My moment.

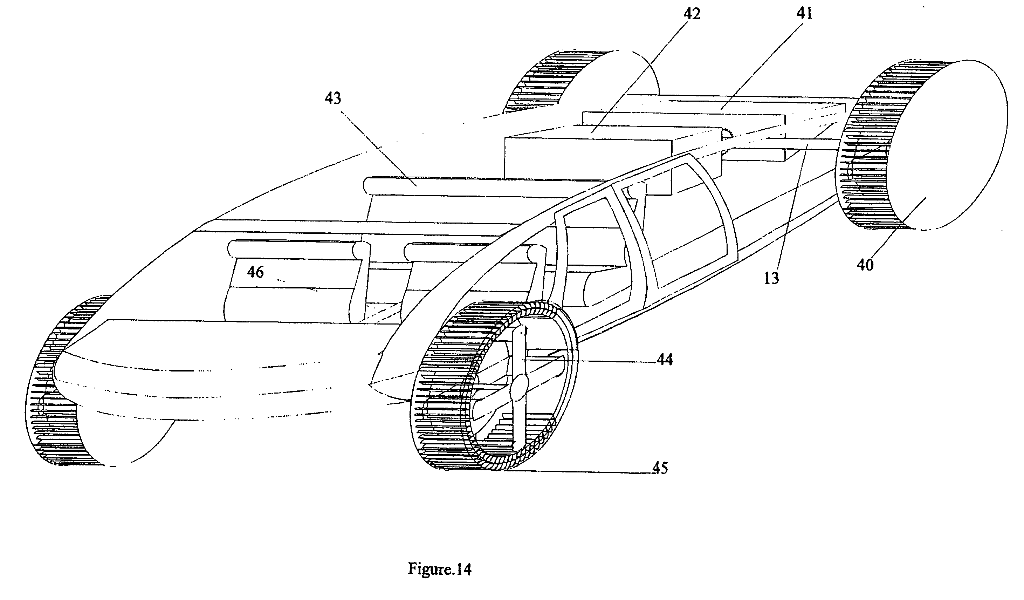

A thrust group 42 is situated in the back part of the fuselage (Figure 14) and consists of one or two engines or gas turbines which start a main drive shaft 46 which in turn, by transmission and conical gears, starts all four drive shafts of the rotor 13. The transmission is classic, it is simple, and only a small ratio of transmission is required. The pilot and space for passengers are situated in the front part of the aircraft.

### Controlling of the Aircraft

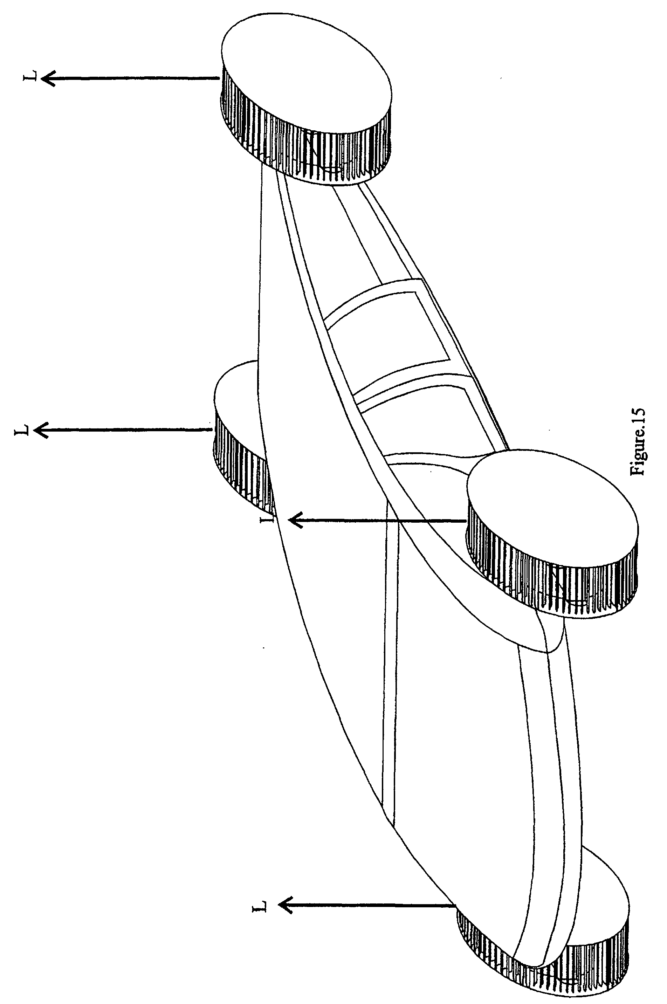

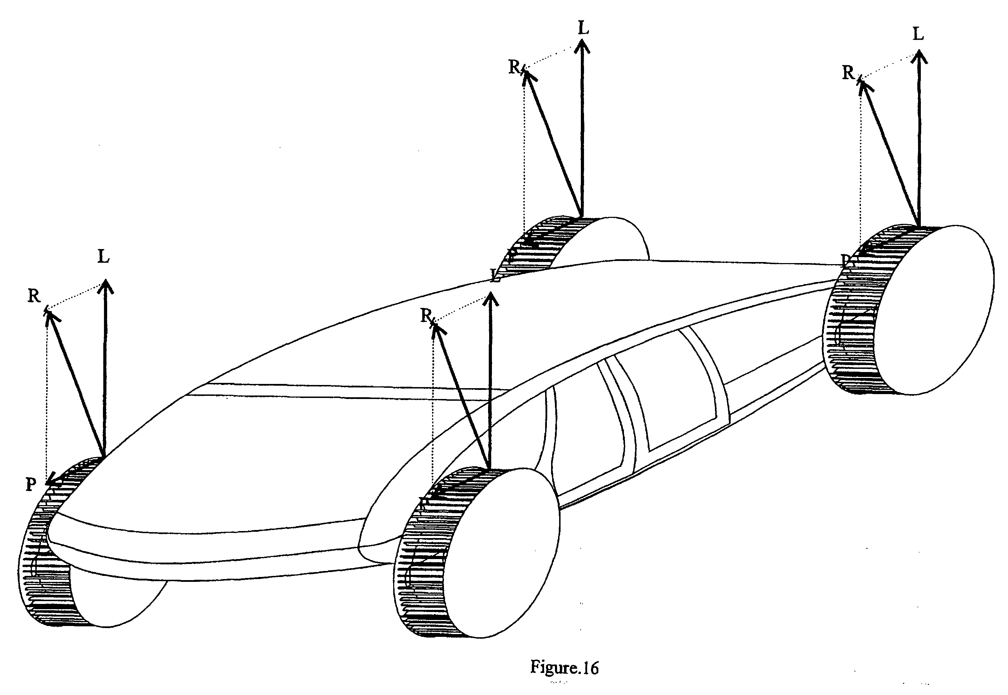

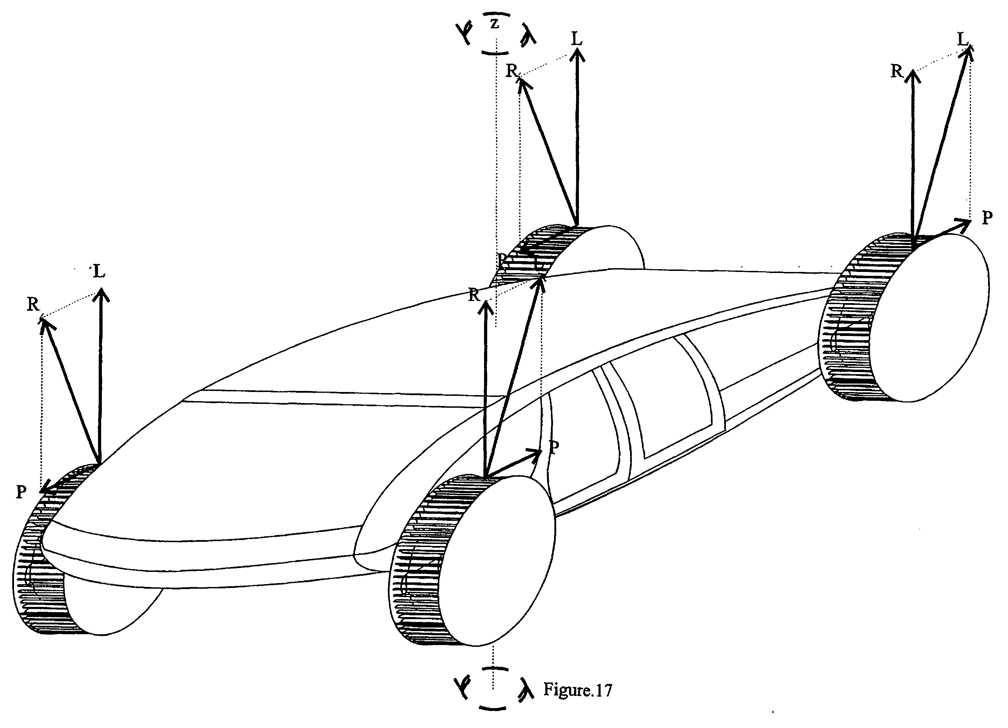

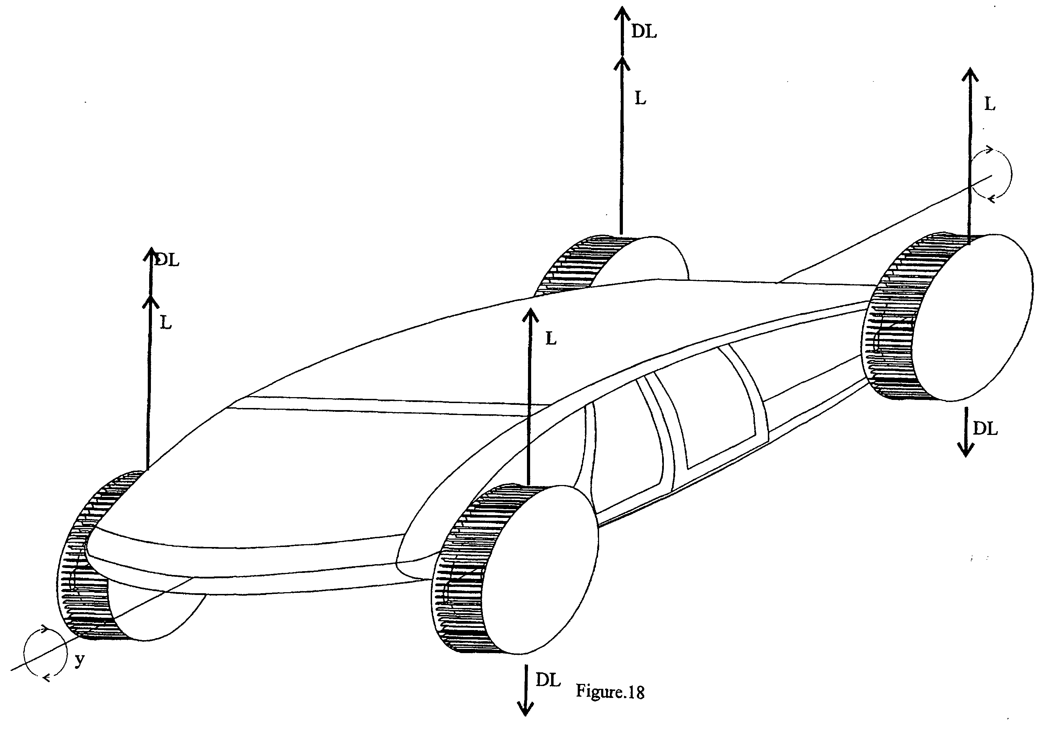

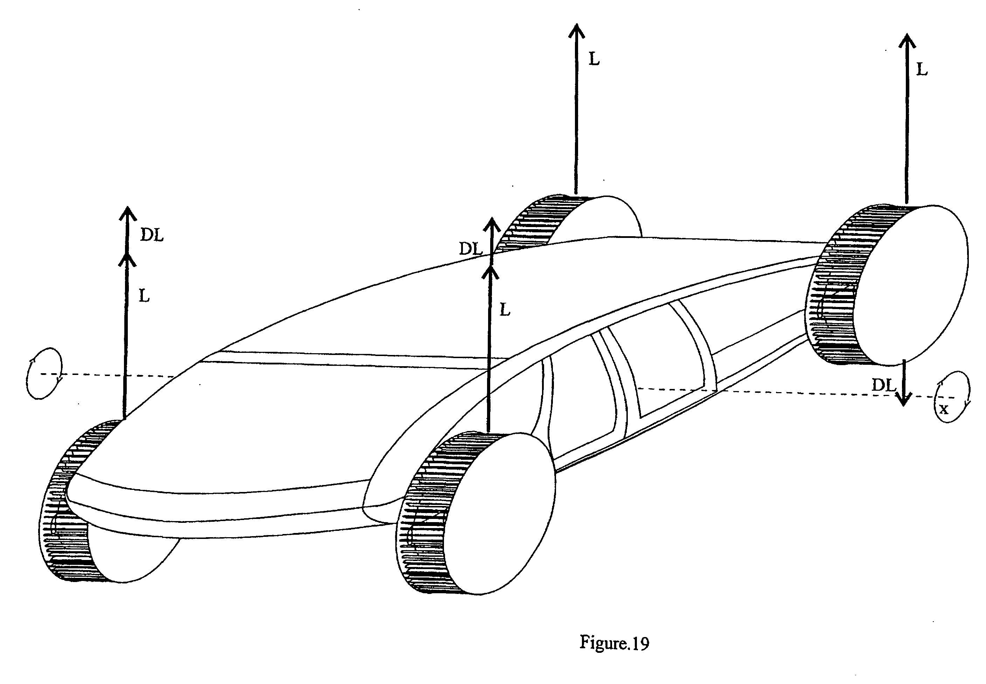

All necessary control moments are generated on the rotors of the aerodynamic generators of the Aeromobil (Figure 15-19). Each Aeromobil has four aerodynamic generators placed on angles of an imagined rectangular base of the aircraft. By increasing and reducing the total value of the lift vector on each rotor or changing its direction and course, it is possible to produce necessary moments around all three space axis initiating with center of gravity of the aircraft. This opposite-proportional change of intensity and direction of the lift vector on the two front generators in relation to the two back ones brings about the rotation around transverse axis y. The same change of intensity and direction of the lift vector on the two right generators in relation to left generators brings about a rotating moment around longitudinal axis x of the aircraft.

An opposite proportional change of the direction of the lift vector on the right in relation to the left generators brings about rotating around vertical axis z of the aircraft. A change of intensity of the lift vector of each aerodynamic generator is done by cylinders of change of th angle of attack (CCAA) which increase or reduce the eccentricity of the eccentric bearing. The eccentricity is transmitted to guiding shaft of the blades which changes the angle of attack of the blades that brings about the change of the lift vector.

A change of the direction of the lift vector is done by the cylinders for change of the direction of the lift (CCDL) which turn the eccentricity of eccentric bearing in relation to the drive shaft and brings about turning of direction of the lift vector in the same direction. In that way the lift vector gets translational component which is caused on all four generators at the same time and gives thrust force to the Aeromobil. This thrust force (thrust vector) is proportional to the angle of turn of the eccentric bearing and the intensity of lift vector. All these control moments are attained by specific a hydraulic system of control.

This hydraulic system consists of cylinders which are on each generator in a number of five. These are: CGCAA 20, Cylinder CMx 6, Cylinder CMy 9, Cylinder CMz 12 and CGCLD 10. These cylinders are connected to special hydraulic distributors by which the work of cylinders is controlled.

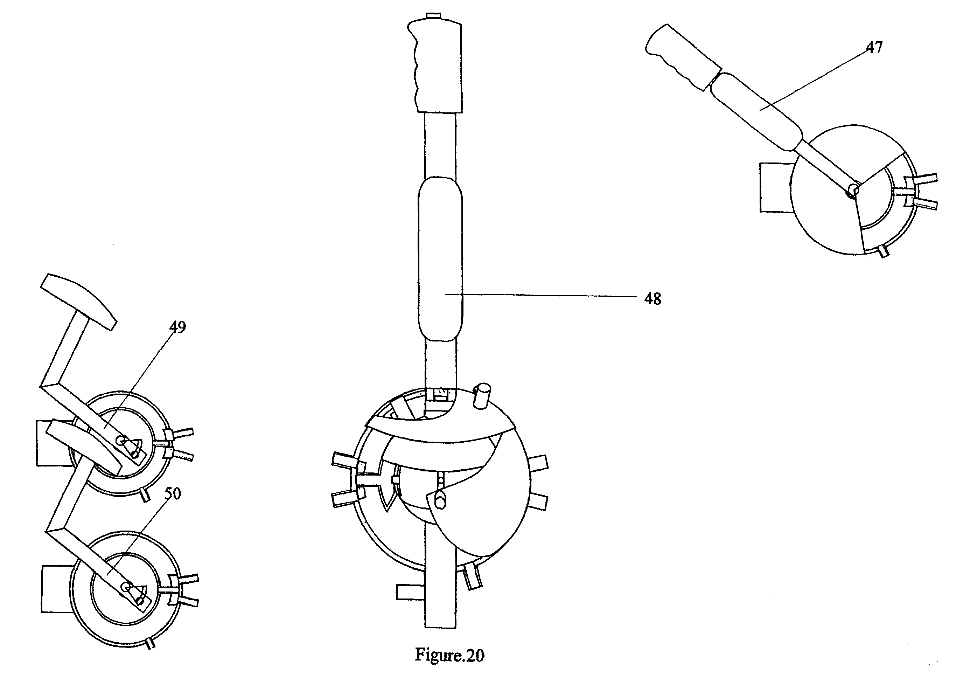

In this system there are four distributors by which all aerodynamic forces on the aeromobil are controlled (Figure 20). Those distributors are: A distributor 47 of group change of the angle of attack of the rotor blades, a distributor 49 of thrust vector, and a distributor 50 of break vector.

The distributor 47 of group change of the angle of attack has the function to activate cylinders CGCAA 20 on all four generators simultaneously and equally. In this way, CGCAA causes a change of the angle of attack of the blade 19 on all four generators. This brings about an equal increase of lift on all four rotors. By this distributor, the pilot controls with his right hand, and there is gas handle on its lever, so that the work of engine and total value of lift can be controlled simultaneously by the right hand in the same time.

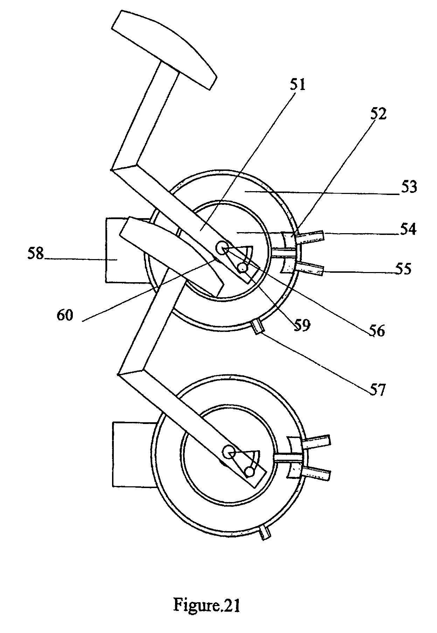

Its design is identical to the design of the distributor 49 of thrust vector, with the only difference that it is a handle, not a foot pedal. The distributor 49 of thrust vector (Figure 21) has the function to activate cylinders CGCLD 10 simultaneously and equally on all four generators and brings about a turn of the eccentric bearing around the thrust shaft which has an equal turn of the direction of lift on all generators as its consequence. This gives a thrust vector to the aircraft, which coincides with its vertical axle and gives to the aircraft a horizontal translational speed.

This distributor consists of a chamber 54 of high pressure t1, a chamber 53 of low pressure t1, a conductor 77 of high pressure t1, a hydraulic connection 55 for COCLD), a pedal axle 56, a receptacle 57 of low pressure t1, a carrier t1 58, a border t1 59, and a spring pedal 60. The distributor functions in a way that oil (under pressure) gets into the cylindrical chamber 54 of high pressure tl through axle 56 which goes through the center of that chamber. By pressing on the lever 51 this chamber (together with conductor 77 of high pressure tl and breeches 2 tl, turns itself around axle 56 and opens the hydraulic coupling for CGCLD 55. An upper coupling is connected to the conductor 77 of high pressure tl through which oil is sent to CGCLD 10. From the other side of the piston of that cylinder oil comes back to the chamber 53 of low pressure tl and through the connection 57 of low pressure tl to the oil tank. By ceasing the effect of force on the pedal under the effect of the spring, the chamber of high pressure tl ,together with the Conductor tl 77 and breeches, gets to previous position in which the hydraulic connections 55 for CGCDL are closed, which provides the piston to preserve attained position and the lift vector by itself.

The distributor 50 for brake vector has the function to annul the thrust vector and gives it an opposite direction which it has in progressive translational motion ahead. The result of that is the occurrence of negative thrust which puts the aircraft in soaring position, and according to which, the aircraft can get into progressive motion backwards.

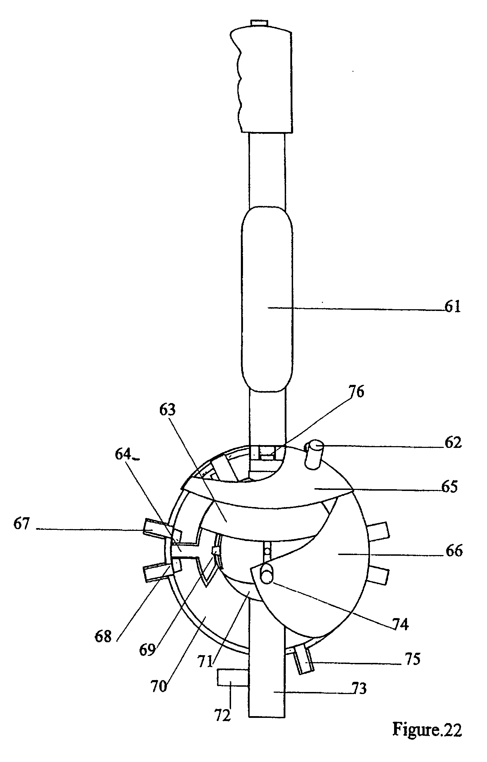

The distributor for the control of direction, altitude and laterally (Figure 22) has the function to enable the pilot to set the aircraft in any position in space whether it is for soaring or translational motion in any direction. The distributor consists of: a chamber 63 of high pressure, a chamber 70 of low pressure, a joint ball 71, a conductor 64 of high pressure, a distributor cap 65 for the cylinders CMz ), a breech 68, hydraulic connections 74, 67, 62 for CMx , CMy , CMz , and a control lever 61. During operating the control lever 61, which has two handles (for left and right hand), rotating of the chamber 63 of high pressure around Joint ball 71 is started. During that time the conductor 64 of high pressure is connected to hydraulic connection, whereby oil is passed under pressure to the hydraulic cylinder on the control head of the aerodynamic generator with simultaneous coming out of oil, on the other side of the cylinders piston into the chamber 70 of low pressure and from there over to the connection 75 of low pressure and into the oil tank. Oil comes from oil tank into the chamber 63 of high pressure, via the oil pump, the connection 72 of high pressure, the carrier 73, the joint ball 71, respectively, and through gets into the chamber 63 of low pressure through stopper 69. In this place the wall of the chamber 70 of low pressure keeps it, until the lever of control and the connection 64 of the conductor of high pressure affects hydraulic connections.

During forward operation of the lever of control 61 the chamber of high pressure 63 is rotated around lateral stopper 69 and the conductor of high pressure 64 is connected with hydraulic connections CMy (67) which are situated on the outside of the wall of the chamber of low pressure 70. At that moment there is connecting of the conductor 64 on the lower hydraulic connections CMy 67 , and from back outside of this distributor there is connection with upper connection CMy. This brings about moving of the piston in cylinders CMy 9 so that the pistons in the two front generators go down and reduce the angle of attack of the blades i.e. the lift until the pistons in the two back generators go up and increase the angle of attack of the rotor blades i.e. the lift. This control brings about the occurrence which results in turning of the aircraft around transverse axis. When the lever 61 is brought into initial position turning of the aircraft around this axis is ceased and the same level of the pressure is exerted on the both sides of the piston of CMy. This makes possible for the springs, which are situated in cylinders, to bring the piston back to the initial position which leads to exerting the same level of lift on all four aerodynamic generators.

During operation of the lever 61 in the opposite direction, the same occurs but in opposite direction. This is stopped by bringing the lever 61 into neutral position. If the lever for control 61 moves itself right, there is connecting of the lateral conductors of high pressure on lower hydraulic connections CMx 74, which is situated on the right side of the wall of the chamber of low pressure 70 and there is connection of the upper coupling on the left side, too. Therefore, oil gets into CMx 7 on the control head of the generators in the way that the pistons in CMx 7, on the left side, go up and increase the angle of attack of blades i.e. lift vector on the left side of the aircraft but the lift vector is reduced for the same value at the generators on the right side of the aircraft. This brings about occurrence of a lateral moment which turns the aircraft around the longitudinal axis of the aircraft. By bringing the lever back into neutral position this is stopped.

During bringing of lever to the opposite side, the aircraft is turned into opposite direction. If the lever of control 61 is turned around the vertical axis which goes through poles of the chamber of high pressure 63, the hydraulic coupling CMz 62, which is situated on the distributor cap 65, is connected with the conductor of high pressure. Therefore oil is passed from chamber of high pressure 63 into the cylinders CMz 12 on the control head of the rotor. That causes turning of the pistons of cylinder CM2 12 around the drive shaft 13 of the rotor which brings about a turn of lift vector. This also brings about the occurrence of a lift vector which is according to intensity equal on right as well as on left generators, but their direction is opposite. This process turns the aircraft around vertical axis z. The direction of turn of the aircraft is equal to the direction of turn of the lever of control. By bringing this lever into neutral position pressure is exerted on both sides of the piston of the cylinders CMZ 12 on the initial level. Under effect of springs 39 which are on both sides of the pistons within these cylinders the lift of direction is brought to initial position. By this, provoked coupling is off and turning of the aircraft around vertical axis is ceased.

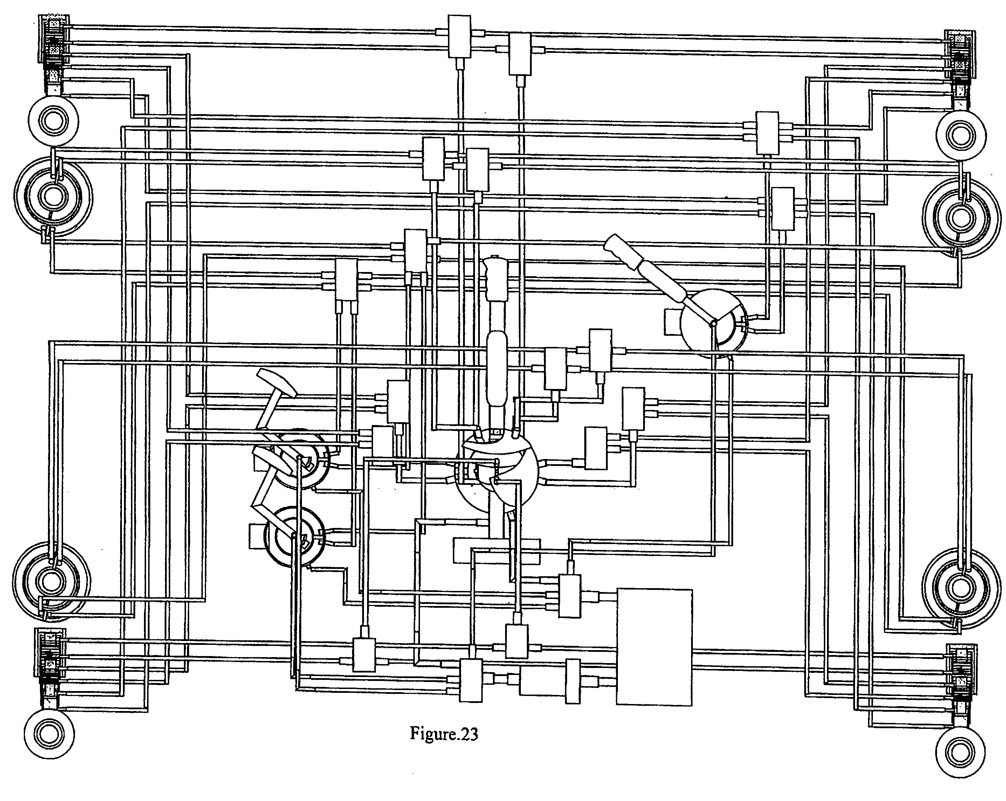

The total scheme of the hydraulic control system of the aeromobil is illustrated in Figure 23. All controls of the aeromobil are independent from each other so that they can be switched on individually or all in the same time but their effect will be totally preserved and independent. That means that the Aeromobil can turn simultaneously around all three space axis and it can go up and move translationally in any direction.

The Aeromobil has two orders of control: Optimal order of control and extreme order of control.

Optimal order of control is the condition of control when the direction of force of the lift of the aerodynamic generators is tied to the position of the aircraft in space (it means that if the aircraft is turned into any direction i.e. around any of its space axis) the direction of the lift force is turned in the the same angle and into same direction. However, for an extreme control the direction of the lift force is not tied to the position of the aircraft in space; therefore, in this condition the control of the aircraft can be turned and even rotated around its transverse axis y. And during this, the lift direction of the aircraft will be the same as in the moment when the aircraft gets into this order of control. This means that the aircraft (if it was in the soaring position on a constant height) in the moment before getting into extreme order, preserves that soaring state condition and the height, and if it is turned for 180 degrees, it is turned totally upside down. This makes it possible for the aircraft that its vertical axis x can take any direction in space, and in the same time, the aircraft soars and changes height. Thee Aeromobil can also have a translational speed in the direction of its cross (transversal) axis y. During this motion it can turn itself or even rotate for full circle around its cross axis X; and during motion of the aircraft neither height nor direction is changed.

The extreme order of control is activated by pressing the electric switch 78 which is located in the top of the lever of distributor 48 of control of direction, height and laterally.

By pressing this button the electromagnetic coupling 32 is activated which separates hydraulic cylinders CGCAA 20 from hydraulic cylinders CGCLD 10. That separates physically the cylinders of the angle of attack, together with eccentric bearing 21, and guide 5, eccentric bearing 21, hydraulic cylinders COCLD 20, and in this way transmits grip of this vector to the center of drive shaft 13 whose direction is identical with the direction of the lift vector. In this way, lesser part of aerodynamic force is transmitted to drive shaft 13 not only through the axle of the blade 18 and the carrier 4 of blades but through the guide axle of the blade 2, the guide 5 and the hydraulic cylinders CGCAA 20. So the aerodynamic force of the rotor blades 19 maintains the direction of the aerodynamic force. As the fuselage of the aircraft is separated from cylinders CGCAA 20, eccentric bearing 21, and guide 5, eccentric bearing 21 maintains the direction of its eccentricity with regard to the drive shaft 13 although the fuselage is turned around that axle.

In the extreme order of control of the aeromobil, only the cylinders of change of the angle of attack (Cylinder CGCAA 20, Cylinder CMx 7, and Cylinder CMy 9) are active, until the cylinders of change of the direction of lift (Cylinder CMz 12, and Cylinder 10) are excluded (switched off). By repeated press on switch 78 of extreme order, the effect of electromagnet on the electromagnetic coupling 32 stops, and under the influence of the springs the cylinders of change of the angle of attack are connected with cylinders of lift-direction-change so that the aircraft gets into optimal order of control.

## Claims

1. An aircraft comprising
- a fuselage
- at least four aerodynamic generators (40) having an aerodynamic rotor (44) attached to a drive shaft (13) and an aerodynamic stator (45) attached to the fuselage, at least two of the aerodynamic generators (40) being arranged laterally on each side of the fuselage, the aerodynamic generators (40) each producing an aerodynamic force in a vertical plane parallel to the longitudinal axis of the aircraft, the intensity and direction of which can be controlled by each rotor (44) independently and simultaneously through a control device being responsive to a plurality of commands such that the intensity of the aerodynamic force can be controlled on all rotors (44) independently and simultaneously from its minimal value 0 to maximum and that the direction of the aerodynamic force on all rotors (44) can be controlled independently and simultaneously in a range from 0 to 360° with respect to the drive shaft (13) of the rotor (44).

2. Aircraft acording to claim 1 wherein the aerodynamic rotor (44) comprises
a blade carrier (4) fixedly attached to the end of the drive shaft (13),
four aeroprofiles (19) disposed symetrically about the drive shaft (13) on the blade carrier (4), the aeroprofiles (19) having a a main shaft (18) and a guided shaft (2),
the control device including an eccentric bearing (21) linkably connected by with the guided shaft (2) of the of the aeroprofile (19) by a guide (5),
wherein the aeroprofiles (19) are rotably connected to the blade carrier (4) about the main shaft (18) of the aeroprofiles (19),
the aeroprofiles (19) rotating around the drive shaft (13) and oscillating in circles around the main shaft (18) of the aeroprofiles (19),
wherein the eccentric bearing (21) can be translated with respect to the drive shaft (13) and can rotate around the center of the drive shaft (13) from 0 to 360°,
- wherein translating the center of the eccentric bearing (21) with respect to the drive shaft (13) provokes an eccentricity of the eccentric bearing (21) which is then transmitted by the guide (5) to the guided shaft (2) of the aeroprofiles (19), causing rotation of the aeroprofiles (19) around the main shaft (18) for the angle of attack proportional to the eccentricity of the guide (5) and which in one full revolution changes as function of a sinus of an angle of the aeroprofile (19) with respect to the center of the drive shaft (13).

3. Aircraft according to claim 1, wherein the commands are completely independent one from another.

4. Aircraft according to claim 1, wherein the control device includes an electrical actuator.

5. Aircraft according to claim 1, wherein each aerodynamic stator (45) comprises parallel aeroprofiles (19) which form a circular aerodynamic lattice around the rotor (44), said the stator (45) transforming the air stream from a translational straight line moving into the stator (45) into a rotating air stream at the exit of the stator (45), and wherein the stators (45) provide safe access to the aircraft while the rotors are in rotation.

6. Aircraft according to claim 1, wherein the fuselage of the aircraft is designed to act as a lifting body.

## Patentansprüche

1. Luftfahrzeug mit
- einem Rumpf
- wenigstens vier aerodynamischen Generatoren (40), die einen an einer Antriebswelle (13) angebrachten aerodynamischen Rotor (44) und einen an dem Rumpf angebrachten aerodynamischen Stator (45) aufweisen, wobei wenigstens zwei der aerodynamischen Generatoren (40) seitlich auf jeder Seite des Rumpfes angeordnet sind, die aerodynamischen Generatoren (40) jeweils eine aerodynamische Kraft in einer vertikalen Ebene parallel zu der Längsachse des Luftfahrzeugs erzeugen, deren Intensität und Richtung durch jeden Rotor (44) unabhängig und gleichzeitig durch eine Regeleinrichtung geregelt werden kann, die auf mehrere Befehle anspricht, so dass die Intensität der aerodynamischen Kraft an allen Rotoren (44) unabhängig und gleichzeitig von ihrem minimalen Wert 0 bis zum Maximum geregelt werden kann, und dass die Richtung der aerodynamischen Kraft an allen Rotoren (44) unabhängig und gleichzeitig in einem Bereich von 0 bis 360° bezüglich der Antriebswelle (13) des Rotors (44) geregelt werden kann.

2. Luftfahrzeug nach Anspruch 1, bei dem der aerodynamische Rotor (44)
einen an dem Ende der Antriebswelle (13) befestigten Flügelträger (4), und
vier Aeroprofile (19) aufweist, die symmetrisch um die Antriebswelle (13) an dem Flügelträger (4) angeordnet sind, wobei die Aeroprofile (19) eine Hauptwelle (18) und eine geführte Welle (2) aufweisen,
wobei die Regeleinrichtung ein exzentrisches Lager (21) umfasst, das gelenkig mit der geführten Welle (2) des Aeroprofils (9) durch eine Führung (5) verbunden ist,
wobei die Aeroprofile (19) mit dem Flügelträger (4) um die Hauptwelle (18) der Aeroprofile (19) drehbar verbunden sind,
die Aeroprofile (19) um die Antriebswelle (13) drehen und in Kreisen um die Hauptwelle (18) der Aeroprofile (9) oszillieren,
wobei das exzentrische Lager (21) bezüglich der Antriebswelle (13) in einer Translationsbewegung bewegt werden kann und um den Mittelpunkt der Antriebswelle (13) von 0 bis 360° drehen kann,
wobei eine Translationsbewegung des Mittelpunkts des exzentrischen Lagers (21) bezüglich der Antriebswelle (13) eine Exzentrizität des exzentrischen Lagers (21) herbeiführt, die dann durch die Führung (5) auf die geführte Welle (2) der Aeroprofile (19) übertragen wird, wodurch eine Drehung der Aeroprofile (19) um die Hauptwelle (18) für den zu der Exzentrizität der Führung (5) proportionalen Angriffswinkel verursacht wird, und die sich bei einer vollen Umdrehung als Funktion eines Sinus eines Winkels des Aeroprofils (19) bezüglich des Mittlelpunkts der Antriebswelle (13) ändert.

3. Luftfahrzeug nach Anspruch 1, bei dem die Befehle vollkommen unabhängig voneinander sind.

4. Luftfahrzeug nach Anspruch 1, bei dem die Regeleinrichtung einen elektrischen Aktuator umfasst.

5. Luftfahrzeug nach Anspruch 1, bei dem der aerodynamische Stator (45) parallele Aeroprofile (19) umfasst, die ein kreisförmiges aerodynamisches Gitter um den Rotor (44) bilden, wobei der Stator (45) den Luftstrom von einer geraden Translationslinie, die sich in den Stator (45) bewegt, in einen rotierenden Luftstrom am Ausgang des Stators (45) umwandelt, und wobei die Statoren (45) einen sicheren Zugang zu dem Luftfahrzeug bereitstellen, wenn sich die Rotoren drehen.

6. Luftfahrzeug nach Anspruch 1, bei dem der Rumpf des Luftfahrzeuges so konstruiert ist, das er als Hebekörper wirkt.

## Revendications

1. Aéronef, comprenant :
- un fuselage,
- au moins quatre génératrices aérodynamiques (40) ayant un rotor aérodynamique (44) fixé à un arbre d'entraînement (13) et un stator aérodynamique (45) fixé au fuselage, au moins deux des génératrices aérodynamiques (40) étant disposées latéralement de chaque côté du fuselage, les génératrices aérodynamiques (40) produisant chacune une force aérodynamique dans un plan vertical parallèle à l'axe longitudinal de l'aéronef, dont l'intensité et la direction peuvent être contrôlées par chaque rotor (44) indépendamment et simultanément au moyen d'un dispositif de commande étant sensible à une pluralité de commandes telles que l'intensité de la force aérodynamique puisse être contrôlée sur tous les rotors (44) indépendamment et simultanément de sa valeur minimale 0 au maximum et que la direction de la force aérodynamique sur tous les rotors (44) puisse être contrôlée indépendamment et simultanément dans une gamme de 0° à 360° par rapport à l'arbre d'entraînement (13) du rotor (44).

2. Aéronef selon la revendication 1, dans lequel le rotor aérodynamique (44) comprend :
un support de pales (4) raccordé fixement à l'extrémité de l'arbre d'entraînement (13),
quatre profils aérodynamiques (19) placés symétriquement autour de l'arbre d'entraînement (13) sur le support de pales (4), les profils aérodynamiques (19) ayant un arbre principal (18) et un arbre guidé (2),
le dispositif de commande comprenant un palier excentrique (21) connecté par tringlerie à l'arbre guidé (2) du profil aérodynamique (19) par un guide (5),
dans lequel les profils aérodynamiques (19) sont connectés en rotation au support de pales (4) autour de l'arbre principal (18) des profils aérodynamiques (19),
les profils aérodynamiques (19) tournant autour de l'arbre d'entraînement (13) et oscillant en cercles autour de l'arbre principal (18) des profils aérodynamiques (19),
dans lequel le palier excentrique (21) peut être translaté par rapport à l'arbre d'entraînement (13) et peut tourner autour du centre de l'arbre d'entraînement (13) de 0 à 360°,
- dans lequel la translation du centre du palier excentrique (21) par rapport à l'arbre d'entraînement (13) provoque une excentricité du palier excentrique (21) qui est alors transmise par le guide (5) à l'arbre guidé (2) des profils aérodynamiques (19), provoquant la rotation des profils aérodynamiques (19) autour de l'arbre principal (18) pour l'angle d'attaque proportionnel à l'excentricité du guide (5) et qui, en une rotation complète, change en fonction d'un sinus d'un angle du profil aérodynamique (19) par rapport au centre de l'arbre d'entraînement (13).

3. Aéronef selon la revendication 1, dans lequel les commandes sont totalement indépendantes les unes des autres.

4. Aéronef selon la revendication 1, dans lequel le dispositif de commande comprend un vérin électrique.

5. Aéronef selon la revendication 1, dans lequel chaque stator aérodynamique (45) comprend des profils aérodynamiques (19) qui forment une grille aérodynamique circulaire autour du rotor (44), ledit stator (45) transformant le mouvement de translation rectiligne de l'écoulement d'air dans le stator (45) en un écoulement d'air tournant à la sortie du stator (45), et dans lequel les stators (45) fournissent un accès sûr à l'aéronef tandis que les rotors sont en rotation.

6. Aéronef selon la revendication 1, dans lequel le fuselage de l'aéronef est conçu pour agir comme un fuselage portant.
